# EUROPEAN PATENT APPLICATION

(11) **EP 1 074 944 A2**
(43) Date of publication of application: **07.02.2001**
(21) Application number: 00305676.9
(22) Date of filing: 05.07.2000
(51) Int. Cl.: G06T 15/00

(54) **Method and apparatus for combining and visualizing items of apparel**

(30) Priority: 12.07.1999 US 351265
(71) Applicant: Styleclick.Com Inc., Culver City, California 90230 (US)
(72) Inventor: Vecchione, Maurizio, Culver City, California 90230 (US); Mika, Joseph, Culver City, California 90230 (US); Pitts, Jeffrey, Reseda, California 91335 (US); Centry, Steven, Culver City, California 90230 (US)
(74) Representative: Wombwell, Francis

(57) **Abstract**

A method for visualizing an object having a plurality of layers. In a particular application, various items of apparel are assembled into an outfit and are visualized as they would appear on a mannequin. Each item of apparel is assigned certain attributes to define how it is layered with other items of apparel so that the assembled outfit is properly visualized.

## Description

### BACKGROUND OF THE INVENTION

### FIELD OF THE INVENTION

The present invention relates generally to the field of computer graphics. More specifically, the invention relates to a method for generating a composite image of an object having a plurality of layers, such as layers of clothing on a mannequin.

### SUMMARY OF THE INVENTION

The present invention provides a method for visualizing an object having a plurality of layers. In a particular application, various items of apparel are assembled into an outfit and are visualized as they would appear on a mannequin. Each item of apparel is assigned certain attributes to define how it is layered with other items of apparel so that the assembled outfit is properly visualized.

### BRIEF DESCRIPTION OF THE DRAWINGS

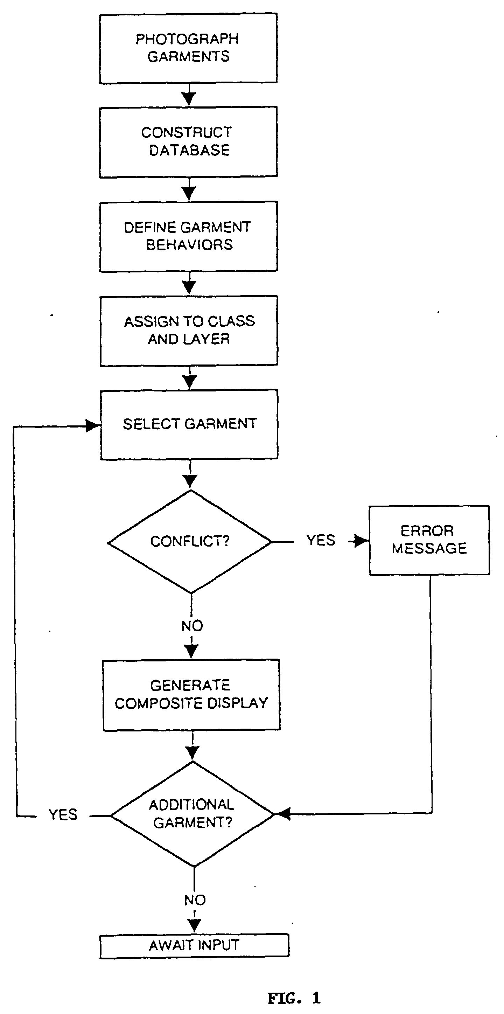

**Figure 1** is a functional flow diagram of a method of rendering an image in accordance with the present invention.

### DETAILED DESCRIPTION OF THE INVENTION

In the following description, for purposes of explanation and not limitation, specific details are set forth in order to provide a thorough understanding of the present invention. However, it will be apparent to one skilled in the art that the present invention may be practiced in other embodiments that depart from these specific details. In other instances, detailed descriptions of well-known methods and devices are omitted so as to not obscure the description of the present invention with unnecessary detail.

The present invention provides a process for assembling various items of apparel into an outfit and visualizing the resulting outfit on a computer monitor. The various items of apparel are photographed on a standard mannequin and the photographic images are maintained in a database. Each item of apparel is assigned attributes or behaviors which define how the item may be combined with other items of apparel. In particular, each item is assigned to a layer which defines whether the item will be displayed above or below other items of apparel when a composite image of the outfit is generated. Furthermore, rules are defined to prevent certain combinations of items that cannot be properly combined. The method steps of the present invention, illustrated in the accompanying drawing, can be summarized as follows:
1. One or more pictures of garments are taken from a fixed common viewpoint on a common mannequin or form.
2. Each picture is indexed in a database.
3. For each garment, a series of behaviors are defined, such as rules for matching or classes of garments that are excluded from matching. These behaviors are added to the database indexed with each garment.
4. Each picture is assigned to one or more class of garments ― such classes are added to the database.
5. Based on the class, each picture is assigned to one of several layers, one per class.
6. A compositing display process involving alpha blending is used to create a finished image of an outfit by filling each display layer with one garment over a picture of a mannequin matching the one used for obtaining the original garment image.
7. No two garments of the same class can occupy the same layer, preventing the creation of outfits that are not real.
8. A check is made to the database based on each one of the garments that have been layered in a composition to detect a possible conflict. In such an event the conflicting garment will be identified and the program will prevent its use as a violation.

It will be recognized that the above-described invention may be embodied in other specific forms without departing from the spirit or essential characteristics of the disclosure. Thus, it is understood that the invention is not to be limited by the foregoing illustrative details, but rather is to be defined by the appended claims.

## Claims

1. A method of rendering an image of an object having a plurality of layers comprising the steps of:
creating an image of each of the plurality of layers from a common fixed viewpoint;
assigning rules to each of the layers defining permissible combinations of layers;
assigning each layer a permissible distance from the object;
selecting a set of layers, the members of the set containing no more than one layer for each permissible distance from the object, the plurality of layers further comprising a permissible combination in accordance with the assigned rules;
creating a composite image of the object with the layers overlaid thereon.
